# EUROPEAN PATENT APPLICATION

(11) **EP 4 084 280 A1**
(43) Date of publication of application: **02.11.2022**
(21) Application number: 21170490.3
(22) Date of filing: 26.04.2021
(51) Int. Cl.: H02J 13/00

(54) **STATUS EVALUATION OF ELECTRICAL POWER DISTRIBUTION GRIDS FOR POWER PRODUCTION PLANTS OR POWER CONSUMING FACILITIES**

(71) Applicant: ABB Schweiz AG, 5400 Baden (CH)
(72) Inventor: HANSEN, Kai, 0383 Oslo (NO); TROSTHEIM, Stein, 1406 Ski (NO)
(74) Representative: Kransell & Wennborg KB

(57) **Abstract**

The present invention relates to a method for evaluating a status of an electrical power distribution grid (3) for a power production plant or power consuming facility (1), the electrical power distribution grid comprising electrical equipment (5,7,9,11) for controlling flow of energy in the grid and for operating devices in the grid, the method comprising: acquiring (S101) input data from the electrical power distribution grid indicative of an operation condition of an electrical equipment in the electrical power distribution grid; determining (S103) a health condition of the electrical equipment based on the input data; if the health condition indicates deviating operation capability, predicting (S105) a future dynamical alteration of electrical energy flow in the electrical power distribution grid caused by a consequence of the deviating operation capability of the electrical equipment, and providing (S107) a signal indicative of the future dynamical alteration to an operator user interface (19).

## Description

### Field of the Invention

The present invention relates to a method for evaluating a status of an electrical power distribution grid for a power production or power consuming plant and to a corresponding system and computer program product.

### Background

Power production plants includes extensive electrical grids for distribution of the produced electrical power. Similarly, industrial plants which are large consumers of electricity have similar extensive electrical grids. Such electrical grids often include electrical equipment such as switchgear, transformers, generators, and other power electronics components. Electrical equipment failure may lead to damage to both personnel at the process plant and to other electrical equipment, but also to large financial losses due to lost production.

For this reason, condition monitoring of electrical equipment is often performed based on monitoring the performance of the electrical equipment, often based on characteristic data indicating the performance of the electrical equipment.

For example, fault diagnosis on individual components of the electrical grid may be performed once an abnormality in the grid is detected. However, this may lead to delayed actions for alleviating the abnormality and to that damage has already occurred.

Accordingly, there is room for improvements with regards to preventing failure in industrial power production or consuming plants.

### Summary

In view of the above-mentioned and other drawbacks of the prior art, it is an object of the present invention to provide a method and a system that at least partly alleviates the deficiencies with prior art. The suggested embodiments provide for predicting a future status of an electrical grid based on knowledge of the health condition of an electrical equipment in the grid.

According to a first aspect of the invention, there is provided a method for evaluating a status of an electrical power distribution grid for a power production plant or power consuming production facility, the electrical power distribution grid comprising electrical equipment for controlling flow of energy in the grid and for operating devices in the grid, the method comprising: acquiring input data from the electrical power distribution grid indicative of an operation condition of an electrical equipment in the electrical power distribution grid; determining a health condition of the electrical equipment based on the input data; if the health condition indicates future deviating operation capability, predicting a future dynamical alteration of electrical energy flow in the electrical power distribution grid caused by a consequence of the deviating operation capability of the electrical equipment, and providing a signal indicative of the future dynamical alteration.

The present invention is at least partly based on the realization to use input data related to the operation of the electrical equipment to predict the future consequences for the entire electrical grid. For example, if the input data indicates a health condition of the electrical equipment that a failure is likely to occur shortly, a prediction is made to determine what the consequences are at a system level, i.e. for the entire electrical distribution grid. If the consequences of the predicted future dynamical alteration of electrical flow are severe, an operator of the system may be informed. The operator may for example make an analysis of the electrical distribution grid and determine if e.g. replacement of equipment should be done fast or if other parts of the system should be reconfigured with e.g. new parameter setting in order to handle consequences from this likely failure in a more robust manner.

The power production plant may for example include wind turbines for power production. However, it should be understood that other types of power production plant are conceivable such as solar power plants, wave power production plants, tidal power production plants, gas or oil power production plants, water power production plants, etc.

A power consuming facility may be e.g. a factory or similar and may be intended for manufacturing or other types of processes. Such power consuming facility run processes which consume large amounts of power and are therefore in need of reliable electrical distribution grids for powering the equipment and machines of the facility.

Electrical equipment should be broadly interpreted as equipment comprised in the electrical distribution grid and that may either be configured to control the flow of electrical energy or to control devices of the grid. Example equipment include generators, transformers, motors, converters/inverters, switchgear, etc.

Accordingly, the present invention is primarily directed to electrical power distribution grids for high power applications.

The signal indicative of the future dynamical alteration may be provided to an operator user interface, or it may be provided to a control system of the power production plant or power consuming production facility to automatically take action to avoid a future failure.

Condition monitoring system for collecting the input data may be based on known technology. The input data may comprise measurement data that indicate the operation condition of the electrical equipment, such as a temperature of the electrical equipment or in the vicinity of the equipment, a moisture measurement, a pressure measurement or even a time measurement, all of which may indicate a present status or generally, the operation condition of the electric equipment. More explicit examples of this may be monitoring of breaker behavior in a circuit breaker in a switchgear, temperatures in the windings of a transformer or temperatures in the power electronics components in a variable speed drive. Generally, the input data indicates the performance or status of the electrical equipment.

Future dynamical alteration of the electrical power flow may be interpreted as an electrical power flow in the electrical power distribution grid that deviates from the expected electrical power flow. The dynamical alteration of the electrical power flow may be related to e.g. variations in electrical power levels at given measurement points such as output levels, obstructions in electrical energy flow, or unexpected voltage/current fluctuations in the electrical power distribution grid.

A health condition of an electrical equipment is an indication of the operating capability of an electrical equipment that can be evaluated based on input data. For example, input data may relate to temperatures in the windings of a transformer or temperatures in the power electronics components in a variable speed drive, or breaker behavior in a circuit breaker in a switchgear. If such input data deviates from a normal operation range or behavior, it may be concluded that the health condition is reduced, and thus that the operating capability deviates from a normal operating capability for the electrical equipment.

A deviating operation capability is when the electrical equipment behaves in a way that is unexpected and that may indicate a fault or failure of the electrical equipment.

With the proposed method, failures at the level of the entire electrical distribution grid caused by a specific electrical equipment may be predicted such that pre-emptive actions may be taken to avoid down-time of the power production plant or power consuming facility.

In embodiments, the method may comprise simulating the electrical energy flow in the electrical power distribution grid using a model with the health condition of the electrical equipment as an input parameter to thereby predict the future dynamical alteration of electrical flow in the electrical power distribution grid.

The model may be based on a real-time electrical circuit/grid simulator, with a single electrical phase representation with ability to simulate large process plant configurations with corresponding dynamic variables and signals. The model includes physical and mathematical model and/or representations of mechanical components of the electrical power distribution grid and electrical components may be represented by equivalent circuit models. Thus, each electrical equipment such as generators, transformers, motors, converters/inverters etc. in the model are represented with a mechanical and electrical dynamics to simulate the real representation of the equipment.

Accordingly, the model is based on dynamical mechanical and electrical representations of the electrical equipment in the electrical power distribution grid.

In embodiments, the method may comprise acquiring real-time input data from real-time monitoring measuring systems of the power production plant or power consuming facility, wherein the real-time input data is used for simulating the electrical flow in the electrical power distribution grid in real-time using the model. Thus, an operator may receive continuous information about any future dynamical alterations of the electrical energy flow, whereby the electrical distribution grid may be accurately monitored, and appropriate actions can be taken in time if unwanted situations are predicted.

Advantageously, the method may comprise acquiring real-time input data from real-time monitoring measuring systems of the power production plant or power consuming facility, wherein the real-time input data is used for determining the health condition of the electrical equipment in real-time. This further enhances the ability to provide timely predictions of the future dynamical alterations of the electrical energy flow to the operator.

In embodiments, the method may comprise comprising running multiple consecutive simulations with different test health conditions of the electrical equipment to thereby predict multiple test scenarios associated with different a future dynamical alterations of electrical energy flow, wherein the test health conditions are related to that the electrical equipment is failing or performing in an unexpected way, wherein the signal includes information about future dynamical alterations for each of the test scenarios. Advantageously, this enables performing several predictions to thereby evaluate, in parallel, more than one "what-if" scenarios based on real-time input data.

In embodiments, the method may comprise, if the future dynamical alterations for at least one of the test scenarios indicates at least one of major disturbances in the electrical energy flow in the electrical power distribution grid, risk of reduced production in the power production plant or power consuming facility, or risk of incidents that involve damage to electrical equipment or harm to humans or consequences for the environment, providing an alert to the operator user interface. Accordingly, as a further precaution and to further improve the safety and operation reliability of the power production plant or power consuming facility, if any one of several undesirable test scenarios is predicted an alarm is issued. An operator may evaluate if any actions, or what actions, are to be taken based on the severity of the test scenarios.

In embodiments, the method may comprise providing a suggested course of action based on the predicted future dynamical alteration of the electrical power distribution grid. For example, a suggested course of action may be related to at least one of rerouting of power distribution, degrading of electrical equipment capabilities to produce power elsewhere in the power production plant or power consuming facility, and shed of load or reduction of load in an energy consumer.

In embodiments, the step of predicting a future dynamical alteration of electrical flow in the electrical power distribution grid is performed in the cloud.

The electrical equipment may be of various types. Some examples include transformers, circuit breakers, variable speed devices for controlling motors, batteries, and generators.

The method is preferably continuously repeated for real-time monitoring of the electrical distribution grid.

According to a second aspect of the invention, there is provided a system for evaluating a status of an electrical power distribution grid for a power production plant or power consuming facility, the electrical power distribution grid comprising electrical equipment for controlling flow of electrical energy in the grid and for operating devices in the grid, the system comprises a control unit configured to: acquiring a health condition of an electrical equipment determined based on input data from the electrical power distribution grid indicative of an operation condition of the electrical equipment; if the health condition indicates a future deviating operation capability, predict a future dynamical alteration of electrical energy flow in the electrical power distribution grid caused by a consequence of the deviating operation capability of the electrical equipment, and provide a signal indicative of the future dynamical alteration.

The control unit may be arranged on a remote server, i.e. part of a cloud based platform. The control unit may in such case receive the health condition of an electrical equipment from the power production plant or power consuming facility.

In other possible implementations, the control unit may be configured to acquire input data from the electrical power distribution grid indicative of an operation condition of an electrical equipment in the electrical power distribution grid, and determine the health condition of the electrical equipment based on the input data.

In embodiments, the system may comprise a graphical user interface, wherein the signal indicative of the future dynamical alteration is providable to the graphical user interface.

Further effects and features of the second aspect of the invention are largely analogous to those described above in connection with the first aspect of the invention.

According to a third aspect of the invention, there is provided a computer program product comprising a computer readable medium having stored thereon computer program means for evaluating a status of an electrical power distribution for a power production plant or power consuming facility, the electrical power distribution grid comprising electrical equipment for controlling flow of electrical energy in the grid and for operating devices in the grid, wherein the computer program product comprises: code for determining a health condition of an electrical equipment based on the input data acquiring from the electrical power distribution grid indicative of an operation condition of the electrical equipment in the electrical power distribution grid; code for, if the health condition indicates a future deviating operation capability, predicting a future dynamical alteration of electrical flow in the electrical power distribution grid caused by a consequence of the deviating operation capability of the electrical equipment, and code for providing a signal indicative of the future dynamical alteration.

Further effects and features of the third aspect of the invention are largely analogous to those described above in connection with the first aspect and the second aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 conceptually illustrates a possible implementation of embodiments of the invention;
Fig. 2 is a flow-chart of method steps according to embodiments of the invention;
Fig. 3 conceptually illustrates a possible implementation of embodiments of the invention;
Fig. 4 is a flow-chart of method steps according to embodiments of the invention; and
Fig. 5 is a box diagram of a system according to embodiments of the invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

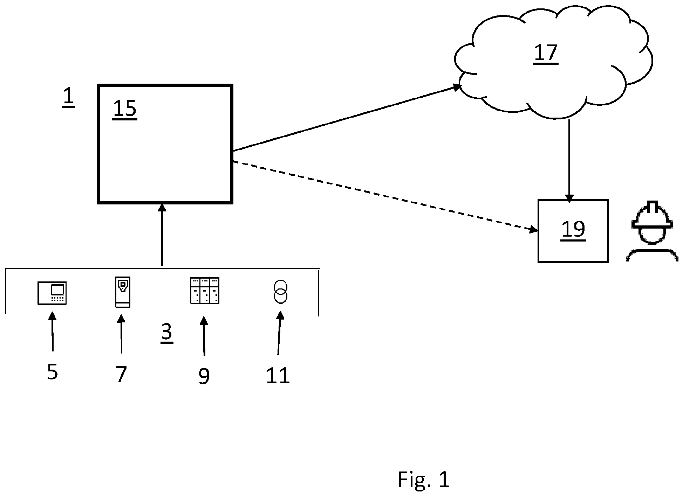

Fig. 1 conceptually illustrates a possible implementation of embodiments of the present invention at a power production plant 1 or power consuming facility 1. The power production plant or power consuming facility comprises an electrical distribution grid 3 that comprises electrical equipment 5, 7, 9, 11 for controlling flow of energy in the grid 3 and for operating devices in the grid 3.

A process control unit 15 is arranged to acquire input data, e.g. condition data, from the electrical power distribution grid 3 indicative of an operation condition of an electrical equipment 5, 7, 9, 11 in the electrical power distribution grid 3. Various types of electrical equipment may be implemented in the electrical power distribution grid 3, such as transformers, circuit breakers, variable speed devices for controlling motors, batteries, and generators.

Based on the input data, the control unit 15 may determine a health condition of one or several of the electrical equipment 5, 7, 9, 11. This may be performed based on condition monitoring algorithms executed on the control unit 15. Determining of the health condition may equally well be determined in the cloud 17, i.e. on a remote server, as well as on the control unit 15 in the power production plant or power consuming facility.

The health input data may be transmitted to the server 17, where the health condition is evaluated, and if the health condition indicates a future deviating operation capability of the electrical equipment, the control unit on the server predicts a future dynamical alteration of electrical energy flow in the electrical power distribution grid 3 caused as a consequence of the deviating operation capability of the one or several of the electrical equipment 5,7,9, 11.

Alternatively, the health condition is evaluated on the local control unit 15 of the power production plant 1 or power consuming facility 1.

The outcome of the prediction is transmitted to the operator workstation 19 from the server 17 or from the local control unit 15 depending on where the prediction is performed, to provide a signal indicative of the future dynamical alteration, here the signal is provided to an operator user interface 19. The signal may alternatively or additionally, be used for automatically controlling equipment of the grid or the power production plant 1 or power consuming facility 1 to take action to avoid a future failure or the grid 3.

The workstation 19 may include a graphical user interface such as a display 21 to provide information about the future dynamical alteration to operator.

A power production plant may for example include wind turbines for power production. However, it should be understood that other types of power production plant are conceivable such as solar power plants, wave power production plants, tidal power production plants, gas or oil power production plants, water power production plants, etc.

A power consuming facility may be e.g. a factory or similar and may be intended for manufacturing or other types of processes. Such power consuming facility run processes and/or machinery which consume large amounts of power and are therefore in need of reliable electrical distribution grids for powering the equipment and machines of the facility.

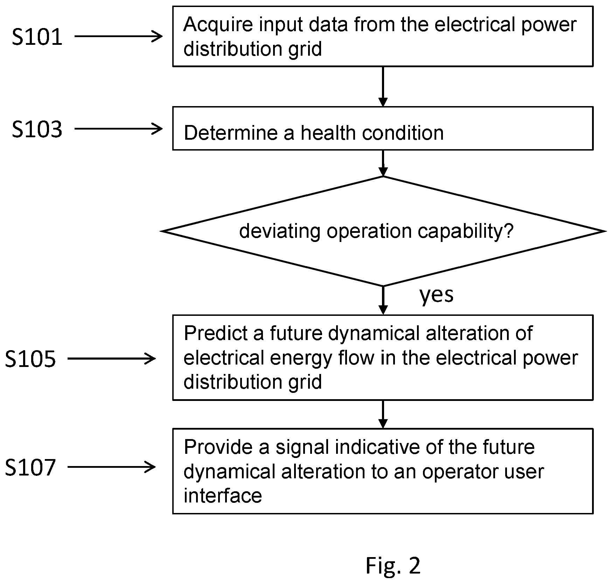

Fig. 2 is a flow chart of method step according to embodiments of the present invention. The method is for evaluating a status of an electrical power distribution grid for a power production plant or power consuming facility. As discussed in relation to fig. 1, the electrical power distribution grid comprising electrical equipment for controlling flow of energy in the grid and for operating devices in the grid.

The electrical equipment may comprise at least one of transformers, circuit breakers, variable speed devices for controlling motors, batteries, and generators.

In step S101, acquiring input data from the electrical power distribution grid indicative of an operation condition of an electrical equipment in the electrical power distribution grid.

In step S103, determining a health condition of the electrical equipment based on the input data.

If the health condition indicates a future deviating operation capability, predicting, in step S105 a future dynamical alteration of electrical energy flow in the electrical power distribution grid caused by a consequence of the deviating operation capability of the electrical equipment.

The step of predicting a future dynamical alteration of electrical flow in the electrical power distribution grid may advantageously be performed in the cloud.

In step S107 providing a signal indicative of the future dynamical alteration to an operator user interface.

Preferably, step S103 includes simulating the electrical energy flow in the electrical power distribution grid using a model with the health condition of the electrical equipment as an input parameter to thereby predict the future dynamical alteration of electrical flow in the electrical power distribution grid.

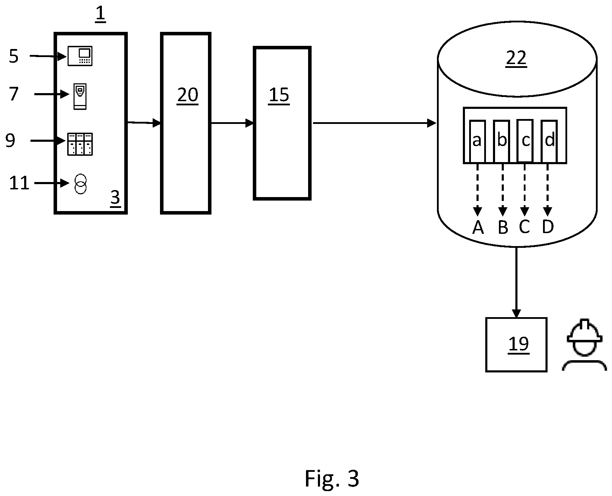

Turning to fig. 3, there is conceptually shown a possible implementation of embodiments of the present invention at a power production plant or power consuming facility 1. Here, the power production plant or power consuming facility 1 comprises real-time monitoring measuring systems 20 that acquire real-time input data from the electrical grid 3. This real-time input data may be used for modelling/simulating the electrical flow in the electrical power distribution grid in real-time based on the model.

The model may be based on a real-time electrical circuit/grid simulator, with a single electrical phase representation with ability to simulate large process plant 1 configurations with corresponding dynamic variables and signals. The model includes physical and mathematical model and/or representations of mechanical components of the electrical power distribution grid and electrical components may be represented by equivalent circuit models. Thus, each electrical equipment 5, 7, 9, 11, such as generators, transformers, motors, converters/inverters etc. in the model are represented with mechanical and electrical dynamic models to simulate the real representation of the equipment. Accordingly, the model is based on dynamical mechanical and electrical representations of the electrical equipment 5, 7, 9, 11, in the electrical power distribution grid 3.

The real-time input data is processed by a control unit 22 either locally located in the plant or facility 1 or on a remote server.

Accordingly, step S101 may comprise acquiring real-time input data from real-time monitoring measuring systems 20 of the power production plant or power consuming facility. The real-time input data is used for simulating the electrical flow in the electrical power distribution grid in real-time using the model in step S105.

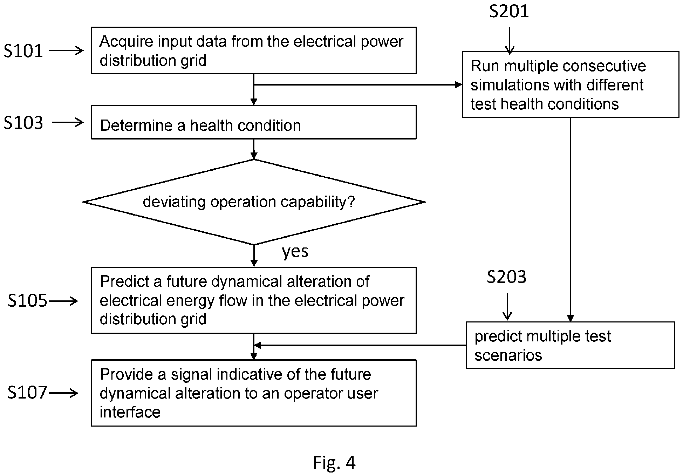

In some implementations, the control unit 22 may run, according to step S201 in fig. 4, step multiple consecutive simulations with different test health conditions a, b, c, d of the electrical equipment 5, 7, 9, 11, to thereby predict, step S203, multiple test scenarios A, B, C, D associated with different a future dynamical alterations of electrical energy flow in the grid 3. The test health conditions are related to that the electrical equipment is failing or performing in an unexpected way. Thus, possible failure scenarios of the electrical equipment 5, 7, 9, 11, are tested in the model. The signal to the operator user interface 19 includes information about future dynamical alterations for each of the test scenarios A-D, as provided in step S107 in fig. 4. The step S101, S103, 105 of fig. 4 are described with reference to fig. 2 and are not repeated here.

If the future dynamical alterations for at least one of the test scenarios A-D indicates at least one of major disturbances in the electrical energy flow in the electrical power distribution grid, risk of reduced production in the power production plant or power consuming facility, or risk of incidents that involve damage to electrical equipment or harm to humans or consequences for the environment, an alert is provided to the operator user interface 19 from the control unit. Thus, step S107 may include to provide an alert to the operator user interface 19.

Preferably, the real-time input data from the real-time monitoring measuring systems 20 of the power production plant 1 or power consuming facility 1 is used for determining the health condition of the electrical equipment 5, 7, 9, 11 in real-time.

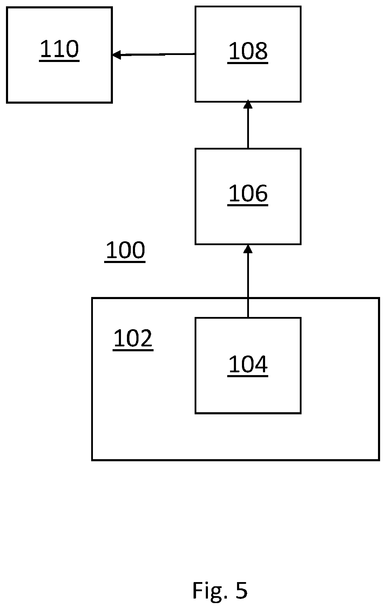

Fig. 5 is a box diagram of a system 100 according to embodiments of the invention. The system being configured for evaluating a status of an electrical power distribution grid 102 for a power production plant or power consuming facility. The electrical power distribution grid comprising electrical equipment 104 for controlling flow of electrical energy in the grid and for operating devices in the grid 102.

Measured input data is provided to condition monitoring algorithms 106 executable by a control unit for analyzing the health condition of the electrical equipment 104. Data indicating the health condition is acquired by the control unit 108, thus the acquired health condition of the electrical equipment is determined based on the input data indicative of the operation condition of the electrical equipment 104.

The control unit 108 may analyze the health condition to determine whether the health condition indicates a future deviating operation capability, if affirmative, the control unit 108 predicts a future dynamical alteration of electrical energy flow in the electrical power distribution grid 102 caused by a consequence of the deviating operation capability of the electrical equipment 104.

The control unit 108 is configured to provide a signal indicative of the future dynamical alteration to an operator user interface 110 or to control systems 110 of the power production plant or power consuming facility. Preferably, the user interface 110 is a graphical user interface through which the signal indicative of the future dynamical alteration is providable to operator.

The control unit 108 may be comprised in a cloud-based platform and thus be located on a server remote from the power production plant or power consuming facility.

The method described herein may be continuously repeated for real-time monitoring of the electrical distribution grid. Thus, the control unit 108 may continuously analyze newly provided input data, or newly acquired heath input data, and to update the prediction of the future dynamic alternation to provide the most recent information to the operator.

The signal provided to the operator user interface 110 may comprise a suggested course of action based on the predicted future dynamical alteration of the electrical power distribution grid 102. A suggested course of action may be related to at least one of rerouting of power distribution, degrading of electrical equipment capabilities to produce power elsewhere in the power production plant or power consuming facility, and shed of load or reduction of load in an power consuming production facility.

There is further provided a computer program product comprising a computer readable medium having stored thereon computer program means for evaluating a status of an electrical power distribution for a power production plant or power consuming facility, the electrical power distribution grid comprising electrical equipment for controlling flow of electrical energy in the grid and for operating devices in the grid.

The computer program product comprises code for determining a health condition of an electrical equipment based on the input data acquiring from the electrical power distribution grid indicative of an operation condition of the electrical equipment in the electrical power distribution grid.

The computer program product further comprises code for, if the health condition indicates a future deviating operation capability, predicting a future dynamical alteration of electrical flow in the electrical power distribution grid caused by a consequence of the deviating operation capability of the electrical equipment.

The computer program product further comprises code for code for providing or generating a signal indicative of the future dynamical alteration to an operator user interface.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

Communication between devices, control units or other modules described herein may be wireless or hardwired, based on electrical and/or fiber-optical communication as is suitable and implement a suitable protocol for the specific case.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for evaluating a status of an electrical power distribution grid (3) for a power production plant (1) or a power consuming production facility (1), the electrical power distribution grid comprising electrical equipment (5,7,9,11) for controlling flow of electrical energy in the grid and for operating devices in the grid, the method comprising:
acquiring (S101) input data from the electrical power distribution grid indicative of an operation condition of an electrical equipment in the electrical power distribution grid;
determining (S103) a health condition of the electrical equipment based on the input data;
if the health condition indicates future deviating operation capability, predicting (S105) a future dynamical alteration of electrical energy flow in the electrical power distribution grid caused by a consequence of the deviating operation capability of the electrical equipment, and
providing (S107) a signal indicative of the future dynamical alteration.

2. The method according to claim 1, comprising simulating the electrical energy flow in the electrical power distribution grid using a model with the health condition of the electrical equipment as an input parameter to thereby predict the future dynamical alteration of electrical flow in the electrical power distribution grid.

3. The method according to claim 2, wherein the model is based on mechanical and electrical equivalent representations of the electrical equipment in the electrical power distribution grid.

4. The method according to any one of claims 2 and 3, comprising acquiring real-time input data from real-time monitoring measuring systems (20) of the power production plant or power consuming facility, wherein the real-time input data is used for simulating the electrical flow in the electrical power distribution grid in real-time using the model.

5. The method according to claim 4, comprising running (S201) multiple consecutive simulations with different test health conditions (a, b, c, b) of the electrical equipment to thereby predict (S203) multiple test scenarios (A, B, C, D) associated with different future dynamical alterations of electrical energy flow, wherein the test health conditions are related to that the electrical equipment is failing or performing in an unexpected way, wherein the signal includes information about future dynamical alterations for each of the test scenarios.

6. The method according to claim 5, comprising, if the future dynamical alterations for at least one of the test scenarios indicates at least one of major disturbances in the electrical energy flow in the electrical power distribution grid, risk of reduced production in the power production plant or power consuming facility, and risk of incidents that involve damage to electrical equipment or harm to humans or consequences for the environment, providing an alert to an operator user interface.

7. The method according to any one of claims 1 and 2, comprising acquiring real-time input data from real-time monitoring measuring systems of the power production plant or power consuming facility, wherein the real-time input data is used for determining the health condition of the electrical equipment in real-time.

8. The method according to any one of the preceding claims, comprising providing a suggested course of action based on the predicted future dynamical alteration of the electrical power distribution grid.

9. The method according to claim 8, wherein a suggested course of action is related to at least one of rerouting of power distribution, degrading of electrical equipment capabilities to produce power elsewhere in the power production plant or power consuming facility, and shed of load or reduction of load in a power consuming production facility.

10. The method according to any one of the preceding claims, wherein the step of predicting a future dynamical alteration of electrical flow in the electrical power distribution grid is performed in the cloud (17).

11. The method according to any one of the preceding claims, wherein the electrical equipment comprises at least one of transformers, circuit breakers, variable speed devices for controlling motors, batteries, and generators.

12. The method according to any one of the preceding claims, wherein the method is continuously repeated for real-time monitoring of the electrical distribution grid.

13. A system (100) for evaluating a status of an electrical power distribution grid (102) for a power production plant or power consuming facility, the electrical power distribution grid comprising electrical equipment (104) for controlling flow of electrical energy in the grid and for operating devices in the grid, the system comprises a control unit (108) configured to:
acquiring a health condition of an electrical equipment determined based on input data from the electrical power distribution grid indicative of an operation condition of the electrical equipment;
if the health condition indicates a future deviating operation capability, predict a future dynamical alteration of electrical energy flow in the electrical power distribution grid caused by a consequence of the deviating operation capability of the electrical equipment, and
provide a signal indicative of the future dynamical alteration.

14. The system according to claim 13, comprising graphical user interface, wherein the signal indicative of the future dynamical alteration is providable to the graphical user interface.

15. A computer program product comprising a computer readable medium having stored thereon computer program means for evaluating a status of an electrical power distribution for a power production plant or power consuming facility, the electrical power distribution grid comprising electrical equipment for controlling flow of electrical energy in the grid and for operating devices in the grid, wherein the computer program product comprises:
code for determining a health condition of an electrical equipment based on the input data acquiring from the electrical power distribution grid indicative of an operation condition of the electrical equipment in the electrical power distribution grid;
code for, if the health condition indicates a future deviating operation capability, predicting a future dynamical alteration of electrical flow in the electrical power distribution grid caused by a consequence of the deviating operation capability of the electrical equipment, and
code for providing a signal indicative of the future dynamical alteration.
